# FASCICULE DE BREVET EUROPEEN

(11) **EP 3 506 564 B1**
(45) Date de publication et mention de la délivrance du brevet: **23.09.2020**
(21) Numéro de dépôt: 18213283.7
(22) Date de dépôt: 18.12.2018
(51) Int. Cl.: H04L 12/18, H04W 84/18, H04W 76/40

(54) **PROCÉDÉ DE ROUTAGE IP MULTICAST DYNAMIQUE DANS UN RÉSEAU AD-HOC**
VERFAHREN ZUM DYNAMISCHEN MULTICAST IP ROUTING IN EINEM AD-HOC-NETZWERK
METHOD FOR DYNAMIC MULTICAST IP ROUTING IN AN AD-HOC NETWORK

(30) Priorité: 28.12.2017 FR 1701402; 15.02.2018 FR 1800143
(43) Date de publication de la demande: 03.07.2019
(73) Titulaire: Thales, 92400 Courbevoie (FR)
(72) Inventeur: BOUYSSOUNOUSE, Guy, 92622 Gennevilliers Cedex (FR); DELATTRE, Michel, 92622 Gennevilliers Cedex (FR); CHEVALLIER, Michel, 92622 Gennevilliers Cedex (FR)
(74) Mandataire: Lucas, Laurent Jacques

(56) Documents cités:
- US-A1- 2009 201 844
- US-B1- 7 969 980

## Description

L'invention se situe dans le domaine des télécommunications dans des réseaux ad-hoc, et porte plus particulièrement sur la génération dynamique d'arbres de routage dans de tels réseaux pour les diffusions multicast.

Les réseaux ad hoc sont des réseaux de télécommunications construits à partir de dispositifs autonomes, qui ne nécessitent pas d'infrastructure fixe et peuvent être fortement mobiles. Les données sont acheminées d'un équipement à un autre et d'un sous-réseau à un autre en utilisant les différents nœuds constituant le réseau. De tels réseaux évoluent dynamiquement selon l'apparition, la disparition, et la disponibilité des noeuds, et suivent leurs changements de position. Ainsi, le chemin parcouru par un paquet de données entre deux nœuds évolue au cours du temps, et est très difficilement prédictible.

Dans la suite, le mot nœud désigne un acteur du réseau, qu'il s'agisse d'un équipement d'infrastructure spécifique, comme un routeur ou une passerelle satellite, ou d'un terminal utilisateur.

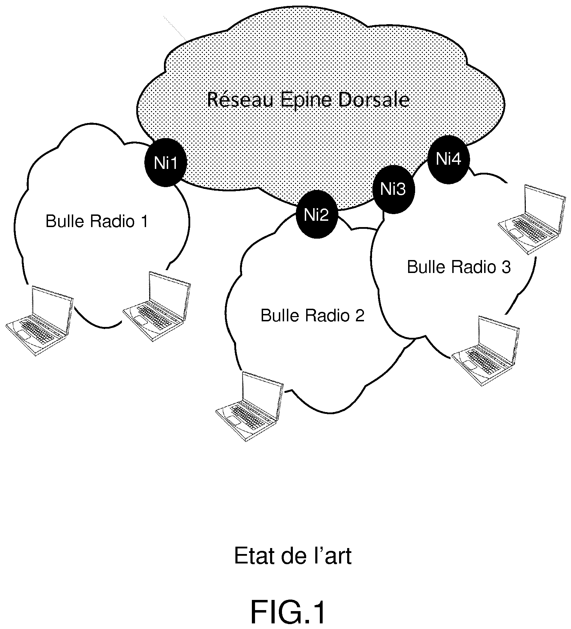

La figure 1 illustre les principes de l'organisation d'un réseau ad-hoc.

Des bulles radios 1 à 3 sont constituées de nœuds situées dans une même zone géographique pouvant communiquer entre eux. Ces bulles radios forment un réseau de noeuds, lui-même organisé en sous-réseaux. Les sous-réseaux sont des subdivisions logiques du réseau, comprenant au moins deux nœuds.

A l'intérieur des bulles radios, les nœuds communiquent par diffusion : les données sont envoyées à l'ensemble des nœuds du réseau ou d'un sous-réseau spécifique, chaque nœud devant par la suite déterminer si les données reçues lui sont destinées ou non.

Les bulles radios évoluent au cours du temps. Certaines bulles peuvent se recouvrir, comme c'est le cas dans la figure 1 pour la bulle radio 2 et la bulle radio 3. Dans ce cas, des nœuds peuvent alors appartenir aux deux bulles radios. Les bulles radio se créent, évoluent et disparaissent au cours du temps.

Afin de pouvoir communiquer entre elles, les bulles radios sont adossées à un réseau épine dorsale, plus connu sous le nom anglais de « backbone network » ou réseau d'interconnexion. Ce réseau épine dorsale est constitué de nœuds privilégiés permettant de relier les différentes bulles radios entre elles. On parle de nœuds d'interconnexion. Dans le réseau épine dorsale, les échanges de données suivent un chemin précis établi par un mécanisme de routage, contrairement aux bulles radios, où les transmissions se font par diffusion sur l'ensemble de la bulle. Le réseau épine dorsale peut être constitué de nœuds reliés par des liens Ethernet, ou de nœuds reliés par des liens radio sans fils, comme des liaisons satellitaires, des liaisons Wi-Fi, des liaisons cellulaires, comme par exemple des liaisons LTE (acronyme anglais pour Long Term Evolution), des liaisons UHF (acronyme anglais pour Ultra High Frequency, ou Ultra Haute Fréquence) ou VHF (acronyme anglais pour Very High Frequency, ou Très Haute Fréquence), ou d'un mélange des deux. Le réseau épine dorsale peut être mobile, et organisé en sous-réseaux.

Les nœuds d'interconnexion font l'interface entre les bulles radios et le réseau épine dorsale. Dans la représentation de la figure 1, ce sont les nœuds Ni1 à Ni4. Ils sont configurés pour recevoir les informations d'un sous-réseau et les relayer sur un autre sous-réseau.

Les protocoles de communication à l'intérieur d'un réseau de communications sont organisés en différentes couches ayant des fonctions différentes. C'est le modèle OSI (Open Systems Interconnection), universellement appliqué. Le routage des données à l'intérieur d'un réseau de communications s'appuie sur des mécanismes de la couche IP (acronyme anglais pour Internet Protocol, ou protocole internet), couche de niveau 3 du modèle OSI permettant de déterminer la route devant être parcourue par les données pour transiter depuis un nœud d'émission vers un ou plusieurs nœuds de réception, soit l'ensemble des nœuds par lesquels les données doivent être retransmises pour être correctement acheminées.

Il s'appuie également sur des mécanismes de la couche MAC (acronyme anglais pour Media Access Control, ou contrôle d'accès au support), couche de niveau 2 du modèle OSI régissant la manière dont sont effectuées chacune des transmissions des données, ou bonds, qui constituent la route suivie par les données échangées entre le nœud d'émission et le nœud de réception.

Les données transmises au sein d'un réseau de communications comprennent à la fois des informations de couche 3 et des informations de couche 2.

Dans la suite du document, on parlera d'échanges de données lorsqu'il s'agira de désigner la liaison de bout-en-bout entre des nœuds qui souhaitent partager des données. Les échanges peuvent faire intervenir différents nœuds adjacents afin de relier les nœuds source et destinataires de l'échange.

Les échanges de données sont des mécanismes opérés au niveau de la couche IP (couche de niveau 3 dans le référentiel OSI). Les données échangées parcourent un chemin fait d'une ou plusieurs liaisons, ou bonds, entre des nœuds adjacents. Les transmissions sur les liens radio sont des mécanismes opérés au niveau de la couche MAC (couche de niveau 2 dans le référentiel OSI).

Les échanges de données (niveau IP) peuvent être assurés selon un mécanisme :
- Unicast (terme anglais, dont l'équivalent français est monodiffusion), dans lequel les données sont échangées depuis un nœud source vers un nœud destinataire unique. Les paquets IP de données unicast comprennent l'adresse IP de la source et l'adresse IP de la destination.
- Multicast (terme anglais, dont l'équivalent français est multidiffusion), dans lequel les données sont échangées depuis un nœud source vers un ou plusieurs nœuds destination. Les paquets IP de données multicast comprennent l'adresse IP de la source et une adresse IP multicast spécifique, à laquelle les terminaux intéressés par les données viennent souscrire.
- Broadcast (terme anglais, dont l'équivalent français est diffusion), diffusion point-à-multipoint de paquets de données depuis un nœud source vers l'ensemble des nœuds du réseau (ou du sous-réseau). Les paquets IP de données broadcast comprennent l'adresse IP de la source et une adresse IP associée à tous les utilisateurs du réseau (ou du sous-réseau)

Les transmissions sur les liens radio (niveau MAC) peuvent être assurées selon un mécanisme :
- Point-à-point, dans lequel les données suivent un lien radio reliant un nœud source à un nœud destinataire unique. Les paquets MAC de données point-à-point comprennent l'adresse MAC de la source et l'adresse MAC de la destination
- Point-à-multipoint, dans lequel les données suivent un lien radio reliant un nœud source à un ou plusieurs nœuds destinataires. Les paquets MAC de données point-à-multipoint comprennent l'adresse MAC de la source et une adresse MAC multicast, associée à plusieurs destinataires, ou une adresse MAC de broadcast, associée à l'ensemble des nœuds d'un même réseau ou sous-réseau.

Les mécanismes d'échanges de données et de transmission sur les liens radio des données sont indépendants : un échange unicast peut être assuré par des liaisons point-à-multipoint. Inversement, un échange de données multicast peut être assuré par des liaisons point-à-point.

Le brevet US 7.969.980 B1 et la demande de brevet US 2009/0201844 A1 traitent de communications multicast.

Au cours de la planification des réseaux ad-hoc sont constitués des groupes d'utilisateurs ayant vocation à partager des données, appelés flux de données multicast. Les différents utilisateurs d'un même groupe peuvent être localisés dans des bulles radios différentes. Par exemple, un groupe G peut être constitué d'utilisateurs situés dans la bulle radio 1 et d'utilisateurs situés dans la bulle radio 2. Le réseau épine dorsale et les nœuds d'interconnexion Ni1 et Ni2 sont alors sollicités pour faire la liaison entre les utilisateurs du groupe G situés dans des bulles radios différentes.

L'invention se place dans le cadre des échanges IP multicast réalisés entre des utilisateurs membres d'un même groupe répartis dans des bulles radio différentes. Les échanges multicast permettent d'acheminer des contenus vers plusieurs nœuds du réseau simultanément plus efficacement que les échanges unicast, car ils mutualisent des liaisons assurées entre les nœuds du réseau situés sur le même chemin de données, ce qui a pour effet de diminuer la charge du réseau. Ce procédé est particulièrement avantageux lorsqu'implémenté au niveau d'un réseau épine dorsale. Par exemple, lorsque les nœuds appartenant au groupe G sont dans la bulle radio 1, à l'exception de deux nœuds situés dans la bulle radio 2, plutôt que de transmettre les flux deux fois par des liens point-à-point à travers le réseau épine dorsale, le routage IP multicast permet de ne faire transiter qu'une seule fois le flux à travers ce réseau.

Le routage IP multicast au sein d'un réseau est bien connu de l'homme du métier. Pour ce faire, existent des procédés standardisés : d'une part des protocoles de formation de groupes, et d'autre part des mécanismes de routage.

Parmi les protocoles de formation de groupes les plus utilisés figurent le protocole IGMP (acronyme anglais pour Internet Group Management Protocol), utilisé pour gérer les adhésions et résiliations aux groupes d'utilisateurs dynamiquement. D'autres protocoles équivalents à IGMP sont connus, comme par exemple le protocole MLD (acronyme anglais pour Multicast Listener Discovery). Dans les réseaux ad-hoc, la gestion des groupes d'utilisateurs est cependant le plus souvent planifiée en amont.

Parmi les mécanismes de routage IP multicast les plus utilisés figurent le mécanisme PIM (acronyme anglais pour Protocol Independant Multicast), utilisé par les nœuds du réseau pour définir les chemins utilisés par les messages multicast. D'autres protocoles équivalents à PIM sont connus, comme par exemple le protocole DVMRP (acronyme anglais pour Distance Vector Multicast Routing Protocol). D'autres protocoles, tels que MSDP (Multicast Source Discovery Protocol), peuvent être utilisés pour interconnecter des domaines PIM ou permettre l'utilisation de plusieurs points de rendez-vous (RP) au sein du même domaine PIM (notion de RP Anycast).

Les mécanismes de routage IP multicast ont pour but de définir les chemins parcourus par les données dans le cadre d'échanges multicast. On parle alors d'arbre de diffusion, dont les racines seraient le nœud source, les feuilles les nœuds destination, et les branches les différents chemins parcourus par les messages pour atteindre l'ensemble des nœuds destination. Cette notion d'arbre est une notion IP abstraite qui s'envisage à l'échelle du réseau.

Lorsque des échanges au sein d'un groupe mettent en œuvre le réseau d'interconnexion, c'est-à-dire lorsque les membres du groupe sont répartis sur deux ou plus bulles radios, le nœud d'interconnexion de la bulle radio contenant des membres du groupe désirant recevoir les messages transmis par un membre du même groupe situé dans une autre bulle radio, par la suite désigné par le nom de nœud d'interconnexion de destination, émet une demande d'adhésion auprès du nœud d'interconnexion reliant le réseau épine dorsale à cette bulle radio, par la suite désigné comme nœud d'interconnexion de source. Les transmissions de groupe sont émises par les nœuds en utilisant une adresse IP multicast spécifique au groupe.

La demande d'adhésion spécifie l'adresse IP multicast du flux de données multicast auquel le nœud d'interconnexion de destination souhaite adhérer, ainsi que l'adresse du nœud source émettant le flux de données multicast. Lorsque les adresses IP du ou des nœuds source ne sont pas connues, la demande d'adhésion peut se faire auprès d'un nœud spécifique du réseau épine dorsale utilisé comme point de rendez-vous (RP). On parle de mode dense ou de mode clairsemé, en anglais 'dense mode' ou 'sparse mode' selon que la demande se fasse auprès du nœud source ou du nœud point de rendez-vous. Dans le protocole PIM, lorsque la demande est effectuée auprès du nœud point de rendez-vous, elle prend la forme d'une demande PIM-SM (acronyme de PIM-Sparse Mode). Lorsqu'elle est effectuée auprès de la source il s'agit de PIM-SSM (acronyme de PIM-Source Specific Mode). Par la suite, par soucis de simplification, sera principalement abordé le cas où les mécanismes de routage opèrent dans un mode SSM, c'est-à-dire un mode dans lequel les demandes d'adhésion se font auprès d'un nœud d'interconnexion de source et non auprès d'un point de rendez-vous. Cependant, les éléments décrits par la suite s'appliquent de manière identique en mode Sparse, lorsque les demandes d'adhésion se font auprès d'un point de rendez-vous.

Chaque demande d'adhésion aux échanges multicast d'un groupe, connue dans le cadre du protocole PIM comme une commande PIM-JOIN, est relayée au sein du réseau épine dorsale vers le nœud d'interconnexion de source. Ce relais se fait par le biais d'un message IP multicast, et a comme paramètres l'adresse IP multicast à laquelle le nœud souhaite adhérer, et la source à l'origine de l'émission des messages (comme c'est le cas par exemple pour les messages PIM utilisés pour les demandes d'adhésions). Les mécanismes de routage IP mis en œuvre visent alors à atteindre cette source en suivant le chemin le plus court. Chaque nœud se trouvant sur le chemin parcouru par la demande d'adhésion mémorise dans ses tables de routage l'adresse IP multicast à laquelle le nœud d'interconnexion destination veut adhérer, le nœud par lequel il a reçu la demande d'adhésion, et le nœud auquel il l'a retransmise.

L'arbre de diffusion multicast est construit pour une source donnée (nœud source ou nœud point de rendez-vous) à l'envers des liens radio parcourus par la demande d'adhésion pour rejoindre la source. Chaque nœud du réseau programme donc sa table de routage de manière à retransmettre les messages à destination de l'adresse IP multicast voulue au nœud par lequel il a reçu la demande d'adhésion pour cette adresse IP multicast. Cette construction des arbres de diffusion est utilisée par tous les protocoles de routage, et est connue sous le nom de RPF (acronyme anglais pour Reverse Path Forwarding, ou transmission sur le chemin inverse).

La notion d'arbre de diffusion connue de l'état de l'art antérieur est donc une notion uniquement basée sur des considérations faites au niveau de la couche IP, visant à parcourir le plus court chemin possible dans le réseau épine dorsale. Elle ne tient pas compte des capacités d'acheminement des liens radio, à l'exception des rares cas où les échanges multicast s'appuient sur un réseau présentant des liens radio ayant une architecture fixe, la diffusion pouvant alors être planifiée en amont. Cette planification amont est cependant complexe, et non résiliente dans le cas de réseaux ad-hoc. Les arbres de diffusion selon l'état de l'art ne sont donc pas optimaux, ce qui se traduit en une surconsommation des ressources du réseau radio.

En effet, certains des nœuds du réseau épine dorsale ont des propriétés de diffusion point à multipoint. C'est le cas par exemple d'un concentrateur satellitaire dans une topologie en étoile, qui consomme exactement les mêmes ressources spectrales selon qu'il s'adresse à un utilisateur particulier en utilisant l'adresse MAC de celui-ci comme adresse de destination, ou à l'ensemble des nœuds de la zone de couverture satellite en utilisant l'adresse MAC du sous-réseau comme adresse de destination. En effet, pour effectuer des transmissions IP unicast, le concentrateur diffuse sur l'ensemble d'une zone géographique. Tous les postes radio reçoivent la transmission, et opèrent un filtrage logique en fonction de l'adresse IP de destination pour voir si la transmission les concerne. C'est également le cas pour la plupart des communications radio sans fil, qu'il s'agit de transmission UHF, VHF, cellulaires, etc...

A l'inverse, certains nœuds sont cantonnés à des liaisons point-à-point. C'est le cas par exemple pour les liaisons RS232, qui par nature ne peuvent s'adresser à tous les membres d'un réseau (ou sous-réseau) en un seul bond. C'est également le cas, par exemple, pour les stations satellitaires d'une liaison satellite déployée selon une topologie en étoile de type « hub and spoke » impliquant un concentrateur (hub) et des stations satellitaires (spoke). Si la liaison dans le sens concentrateur vers stations satellitaires atteint simultanément toutes les stations satellitaires, dans le sens station satellitaire vers concentrateur, les stations satellitaires peuvent émettre simultanément sur des fréquences porteuses différentes. Sauf à équiper les stations satellitaires de multiples chaines de réception et à gérer les problèmes d'effets proche-lointain, le concentrateur sera alors la seule station du réseau en mesure de recevoir les émissions émise par les stations satellitaires. En pratique, c'est le cas dès lors que les équipements d'un sous-réseau ne sont pas tous en visibilité les uns des autres, ou lorsqu'ils transmettent tous en même temps, sur des fréquences porteuses différentes ou en utilisant des séquences d'étalement. C'est également le cas lorsque les transmissions sont protégées par un cryptage dont les clés ne sont pas partagées par tous les membres du réseau.

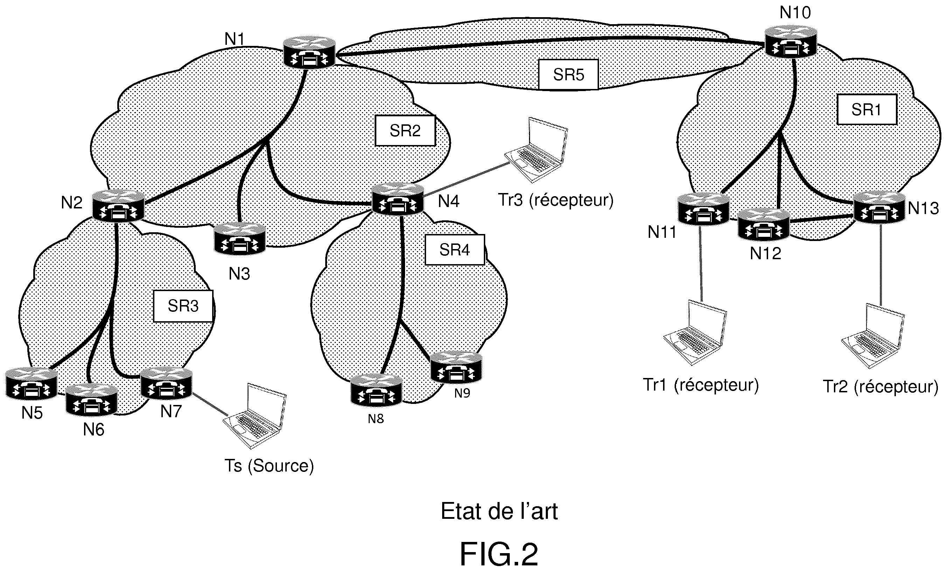

La figure 2 représente un exemple de routage multicast selon l'état de l'art réalisé dans réseau épine dorsale. Les nœuds N1 à N13 du réseau épine dorsale sont organisés dans cinq sous-réseaux, référencés SR1 à SR5. Tous ces nœuds peuvent jouer le rôle de nœud d'interconnexion vers des bulles radios.

Par exemple, dans le sous-réseau SR1, le nœud N10 a une capacité de diffusion point-à-multipoint vers les nœuds N11, N12 et N13. A l'inverse, le nœud N11 ne peut diffuser qu'auprès du nœud N10. Les nœuds N12 et N13 peuvent diffuser entre eux, et vers N10.

Pour diffuser vers un nœud particulier parmi N11, N12 et N13, le nœud N10 peut soit utiliser une liaison point-à-point, soit utiliser ses capacités de diffusion point-à-multipoint, et diffuser vers les trois nœuds simultanément. Le nœud N10 peut alors utiliser comme adresse de destination de niveau 2 l'adresse MAC du sous-réseau SR1, c'est-à-dire l'adresse MAC associée à l'ensemble des nœuds qui constituent le sous-réseau.

Le sous-réseau SR5 ne comprend que deux noeuds, qui n'ont pas de capacité diffusante broadcast car ils ne peuvent atteindre qu'un seul noeud.

En bref, dans le réseau épine dorsale représenté en figure 2 :
- les nœuds N1 dans le sous-réseau SR2, N2 dans SR3 et N10 dans SR1 ont chacun une capacité diffusante point-à-multipoint de 3 noeuds,
- les nœuds N4 dans le sous-réseau SR4, et N12 et N13 dans SR1 ont chacun une capacité diffusante point-à-multipoint de 2 noeuds,
- les autres couples nœuds/sous-réseau n'ont pas de capacité diffusante point-à-multipoint, car ils ne peuvent atteindre qu'un seul nœud.

Lorsqu'un équipement tel que Tr1, appartenant à une bulle radio reliée au réseau épine dorsale par le nœud N11, s'inscrit dans un groupe G pour recevoir les données multicast transmises par le nœud Ts appartenant à une autre bulle radio reliée au réseau épine dorsale par le nœud N7, le nœud N11 émet une demande d'adhésion comprenant l'adresse IP multicast du groupe G et l'adresse IP de N7. De manière classique, à partir de cette adresse IP multicast, chaque nœud du réseau épine dorsale est capable de déterminer l'adresse MAC du prochain nœud de la transmission sur la route reliant N11 à N7, cette adresse étant inscrite dans ses tables de routage. La demande d'adhésion est donc transmise au nœud N10 par un lien point-à-point en utilisant comme adresse de destination l'adresse MAC de N10, et successivement retransmise sur des liens point-à-point par les nœuds N1, N2 et N7.

L'arbre de diffusion pour les données du groupe G pour les flux échangés dans la bulle radio connectée par N7 suit le chemin inverse de la demande d'adhésion. Les routeurs sont alors configurés pour transmettre les flux de données associés à l'adresse IP multicast de G en provenance de N7 par bonds successifs vers N11 à travers les nœuds N2, N1, puis N10, en utilisant à chaque bond des liens point à point, c'est-à-dire en utilisant successivement comme adresse MAC de destination l'adresse MAC de ces nœuds.

Lorsqu'un deuxième équipement, tel que l'équipement Tr2, appartenant à une bulle radio reliée au réseau épine dorsale par le nœud d'interconnexion N13, souhaite s'inscrire aux échanges multicast du groupe G, N13 émet une demande d'adhésion qui est transmise à N7 par des bonds point-à-point successifs utilisant l'adresse MAC des nœuds N10, N1, N2 et N7 comme adresse de destination.

L'arbre de diffusion multicast intègre alors les informations permettant à Tr2 de recevoir les données du groupe, soit les chemins N7, N2, N1, N10 et N13, utilisant à chaque bond l'adresse MAC du nœud destinataire. L'arbre de diffusion mutualise les chemins communs utilisés pour joindre Tr1 et Tr2. Ainsi, lorsque Ts émet un message à destination du groupe G, celui-ci est acheminé par le biais d'une unique liaison point-à-point entre N7 et N2, N2 et N1, N1 et N10. Il est ensuite acheminé vers N11 par le biais de la liaison point à point reliant N10 et N11, et vers N13 par le biais de la liaison point à point reliant N10 et N13. Ce faisant, la diffusion n'exploite pas la capacité de diffusion point-à-multipoint du nœud N10 au sein du réseau, qui aurait permis de joindre N11 et N13 en une seule transmission en utilisant comme destination l'adresse MAC du sous-réseau SR1. La conséquence est que, dans cet exemple, la consommation de bande passante sur le sous-réseau SR1 est le double de ce qu'elle aurait pu être si la liaison N10 vers N11 et N13 avait été réalisée en diffusant le flux par un lien point-à-multipoint sur le sous-réseau SR1.

Il existe donc un besoin d'amélioration des procédés de routage des données multicast au sein d'un réseau, utilisable en particulier dans le cadre d'un réseau ad-hoc.

Pour ceci, l'invention propose de calculer l'arbre de diffusion des données multicast en prenant en compte les contraintes d'acheminement IP des messages, mais également les capacités radio de diffusion des différents nœuds du réseau, dans le but de réduire la charge du réseau pour les transmissions de groupe. L'invention se rapporte à un procédé de routage d'une demande d'adhésion à un flux de données multicast, d'une demande de résiliation aux flux, et d'un réseau de communications, tels qu'ils sont décrits dans les revendications annexes.

A cet effet, l'invention décrit un procédé de routage d'une demande d'adhésion à un flux de données multicast faite par un premier nœud auprès d'un deuxième nœud dans un réseau de communications comprenant au moins un sous-réseau, chaque sous-réseau comprenant au moins deux nœuds voisins du réseau de communications. A l'intérieur du réseau, une adresse MAC distincte est associée à chaque nœud et à chaque sous-réseau. Le procédé de routage selon l'invention comprend des étapes successives de transmission de la demande d'adhésion par bonds entre des nœuds voisins du réseau de communications selon une route reliant le premier nœud au deuxième nœud. La transmission de la demande d'adhésion entre des nœuds voisins d'un sous-réseau utilise une liaison radio point-à-multipoint lorsque le nœud destination de la transmission dans le sous-réseau (à l'échelle du bond considéré) est le nœud ayant la plus grande capacité diffusante dans le sous-réseau, c'est-à-dire le nœud du sous-réseau ayant la possibilité d'atteindre le plus grand nombre de nœuds du sous-réseau par le biais d'une transmission point-à-multipoint. Lorsque plusieurs nœuds du sous-réseau ont la même capacité diffusante maximum, une règle de priorité peut être instaurée, permettant de déterminer lequel des nœuds est éligible aux transmissions point-à-multipoint. Dans ce cas, la transmission selon une liaison point-à-multipoint est réalisée lorsque le nœud destination de la transmission (à l'échelle du bond radio considéré) satisfait également une règle de priorité. A défaut, la transmission de la demande d'adhésion entre les nœuds voisins du sous-réseau est faite selon une liaison point-à-point.

En effet, dans les procédés de routage d'une demande d'adhésion selon l'état de l'art, les transmissions des demandes d'adhésions utilisent des liaisons point-à-point entre les différents nœuds impliqués dans l'échange, et ne tirent aucun avantage des capacités de diffusion point-à-multipoint des nœuds radio. Dans le procédé selon l'invention, les étapes de transmission de la demande d'adhésion entre des nœuds voisins utilisent une liaison radio point-à-multipoint ou point-à-point selon les capacités diffusantes du nœud destination de la transmission dans le sous-réseau. Ainsi, l'arbre de diffusion du flux de données multicast, qui est construit à l'envers du chemin parcouru par le message d'adhésion, utilise la capacité diffusante des liens radio qui en disposent.

Ainsi, sur la liaison radio point-à-multipoint, l'adresse de destination de niveau 2 (MAC) pour le bond considéré est l'adresse MAC du sous-réseau auquel lesdits nœuds voisins appartiennent.

Selon un mode de réalisation du procédé de routage d'une demande d'adhésion selon l'invention, une étape préliminaire de découverte des capacités diffusantes de l'ensemble des nœuds des sous-réseaux auxquels ils appartiennent est réalisée par les nœuds du réseau participant à la transmission de la demande d'adhésion.

Selon un mode de réalisation du procédé de routage d'une demande d'adhésion selon l'invention, les nœuds du réseau réalisent en outre une étape préliminaire de découverte des bulles radios auxquelles le réseau est connecté par des nœuds d'interconnexion, et des groupes appartenant à ces bulles radios.

Selon un mode de réalisation du procédé de routage d'une demande d'adhésion selon l'invention, l'étape de transmission de la demande d'adhésion entre des nœuds voisins utilisant une liaison radio point-à-multipoint est réalisée en définissant de manière statique les chemins parcourus par les demandes d'adhésion à destination d'un nœud point de rendez-vous du réseau de communications. Ce mode de réalisation est utilisé en particulier lorsque les nœuds ne peuvent avoir accès aux capacités diffusantes des autres nœuds du réseau.

L'invention porte également sur un procédé de routage d'un flux de données multicast entre un premier nœud et un deuxième nœud dans un réseau de communications comprenant au moins un sous-réseau. A l'intérieur du réseau, une adresse MAC distincte est associée à chaque nœud et à chaque sous-réseau. Le procédé selon l'invention comprend les étapes de :
- routage d'une demande d'adhésion au flux de données multicast entre ledit deuxième nœud et ledit premier nœud par un procédé de routage d'une demande d'adhésion selon l'invention. Lorsque le routage est réalisé entre un nœud de source du flux de données multicast et un nœud de destination du flux de données multicast, alors la demande d'adhésion est envoyée par le nœud de destination et vise à atteindre le nœud de source ;
- ajout du chemin inverse du trajet parcouru par ladite demande d'adhésion à un arbre de diffusion du flux de données multicast émis depuis le premier nœud,
- diffusion du flux de données multicast dans le réseau de communications depuis le premier nœud vers le deuxième nœud en suivant les chemins définis par l'arbre de diffusion.

Avantageusement, l'étape de diffusion du flux de données multicast utilise un procédé de diffusion par recombinaisons, tel que celui décrit dans la demande de brevet Européenne EP 3 247 076 A1.

Selon un mode de réalisation du procédé de routage d'un flux de données multicast selon l'invention, ledit premier nœud et ledit deuxième nœud sont des nœuds d'interconnexion du réseau avec des bulles radios différentes comprenant des terminaux utilisateurs appartenant à un même groupe d'utilisateurs.

Selon un autre mode de réalisation du procédé de routage d'un flux de données multicast selon l'invention, ledit premier nœud est un nœud point de rendez-vous, et ledit deuxième nœud est un nœud d'interconnexion du réseau avec au moins une bulle radio.

L'invention porte également sur un procédé de routage d'une demande de résiliation à un flux de données multicast faite par un premier nœud auprès d'un deuxième nœud dans un réseau de communications comprenant au moins un sous-réseau, chaque sous-réseau comprenant au moins deux nœuds voisins du réseau de communications. A l'intérieur du réseau, une adresse MAC distincte est associée à chaque nœud et à chaque sous-réseau. Le procédé de routage comprend des étapes successives de transmission de la demande de résiliation entre des nœuds voisins du réseau de communications selon une route reliant le premier nœud au deuxième nœud. La transmission de la demande de résiliation entre des nœuds voisins d'un sous-réseau utilise une liaison radio point-à-multipoint lorsque le nœud destination de la transmission dans le sous-réseau est le nœud ayant la plus grande capacité diffusante dans le sous-réseau. En cas d'égalité avec un autre nœud du sous-réseau, le nœud destination doit en outre satisfaire une règle de priorité. A défaut, la transmission de la demande de résiliation entre des nœuds voisins d'un sous-réseau est faite selon une liaison point-à-point.

Enfin, l'invention porte également sur un réseau de communications comprenant au moins un sous-réseau, chaque sous-réseau comprenant au moins deux nœuds voisins du réseau. A l'intérieur du réseau, une adresse MAC distincte est associée à chaque nœud et à chaque sous-réseau. Dans l'invention, les nœuds du réseau sont configurés pour transmettre une demande d'adhésion à un flux de données faite par un premier nœud auprès d'un deuxième nœud du réseau de communications par des étapes successives de transmission de la demande entre des nœuds voisins du réseau de communications selon une route reliant le premier nœud au deuxième nœud. Les nœuds du réseau de communications impliqués dans la transmission de la demande d'adhésion entre deux nœuds voisins d'un sous réseau sont configurés pour utiliser une liaison radio point-à-multipoint lorsque le nœud destination de la transmission dans le sous-réseau est le nœud ayant la plus grande capacité diffusante dans le sous-réseau, et, en cas d'égalité avec un autre nœud du sous-réseau, lorsque le nœud destination de la transmission dans le sous-réseau satisfait une règle de priorité, et pour utiliser une liaison point-à-point sinon.

L'invention s'applique dès lors qu'il est procédé à l'établissement d'un arbre de diffusion multicast au sein d'un réseau, quelque ce soit le type de réseau. Il est particulièrement adapté aux réseaux épine dorsale ad-hoc, de tels réseaux bénéficiant généralement de capacité de diffusion point-à-multipoint. De plus, le procédé selon l'invention peut être mis à jour dynamiquement, cette propriété étant nécessaire dans le cadre de réseaux ad-hoc pour lesquels il est presque impossible de planifier les chemins des données. C'est la raison pour laquelle la description qui suit s'appuie principalement sur de tels réseaux.

### Description

L'invention sera mieux comprise et d'autres caractéristiques et avantages apparaîtront mieux à la lecture de la description qui suit, donnée à titre non limitatif, et grâce aux figures annexées parmi lesquelles :
- La figure 1 illustre les principes de l'organisation d'un réseau ad-hoc,
- La figure 2 représente un exemple de routage multicast selon l'état de l'art réalisé dans réseau épine dorsale,
- La figure 3 représente un exemple de mise en œuvre d'un mode de réalisation d'un procédé de routage d'une demande d'adhésion selon l'invention dans un réseau épine dorsale,
- La figure 4 représente les chemins parcourus par les flux de données multicast transmis dans un réseau dans lequel a été mis en œuvre un procédé de routage d'une demande d'adhésion dans un réseau épine dorsale tel que celui présenté en figure 3,
- La figure 5 représente un exemple de mise en œuvre d'un mode de réalisation d'un procédé de routage d'une demande d'adhésion selon l'invention dans un réseau épine dorsale comprenant un point de rendez-vous,
- La figure 6 représente les chemins parcourus par les flux de données multicast dans un réseau dans lequel a été mis en œuvre un procédé de routage d'une demande d'adhésion dans un réseau épine dorsale tel que celui présenté en figure 5,
- La figure 7 représente un exemple de mise en œuvre d'un mode de réalisation d'un procédé de routage d'une demande d'adhésion selon l'invention dans un réseau épine dorsale comprenant un point de rendez-vous et des chemins statiques,
- La figure 8 représente les chemins parcourus par les flux de données multicast dans un réseau dans lequel a été mis en œuvre un procédé de routage d'une demande d'adhésion dans un réseau épine dorsale tel que celui présenté en figure 7,
- La figure 9 illustre la mise en œuvre d'un mode de réalisation d'un procédé de routage d'un flux multicast dans un réseau ad-hoc selon l'invention,
- La figure 10 est une représentation sous la forme d'un diagramme d'état des étapes d'un mode de réalisation du procédé selon l'invention de routage d'une demande d'adhésion dans un réseau de communications,
- La figure 11 est une représentation sous la forme d'un diagramme d'état des étapes d'un mode de réalisation du procédé selon l'invention de routage d'un flux de données multicast dans un réseau de communications.

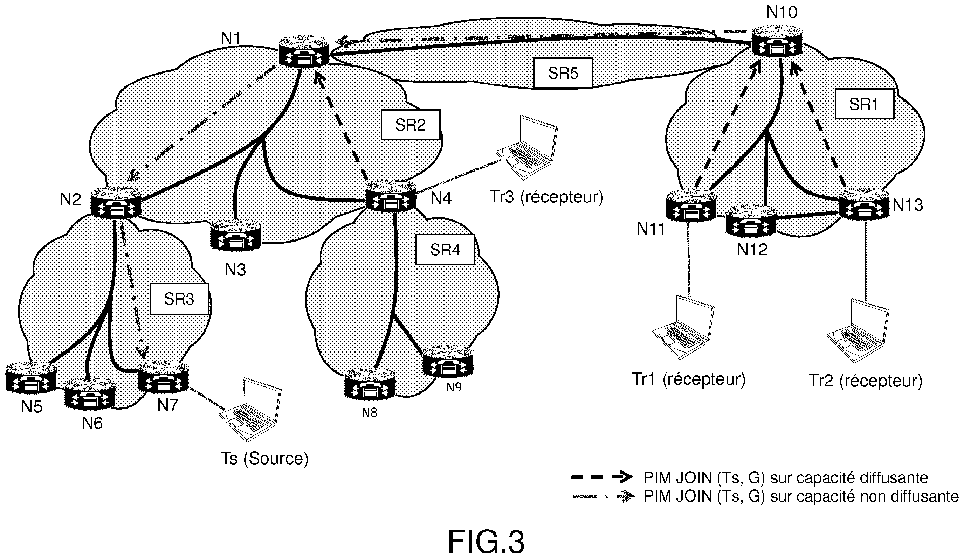

La figure 3 représente un exemple de mise en œuvre d'un mode de réalisation d'un procédé de routage d'une demande d'adhésion selon l'invention dans un réseau épine dorsale tel que celui présenté en figure 2.

Chaque nœud connait les capacités de diffusion point-à-multipoint, ou capacité diffusante, des autres nœuds appartenant au même sous-réseau, c'est-à-dire le nombre de nœuds du sous-réseau pouvant être atteints en utilisant l'adresse MAC de diffusion point-à-multipoint associée à l'ensemble des nœuds du sous-réseau.

L'équipement Tr1 est dans une bulle radio raccordée au réseau épine dorsale par le nœud d'interconnexion N11. L'équipement Tr2 est dans une autre bulle radio, raccordée au réseau épine dorsale par le nœud d'interconnexion N13. L'équipement Ts est dans une troisième bulle radio, raccordée au réseau d'interconnexion par le nœud d'interconnexion N7. Les équipements Tr1, Tr2 et Ts font tous trois partie d'un même groupe G d'utilisateurs.

Lorsque l'équipement Tr1 souhaite rejoindre le groupe G, il envoie une requête IGMP au routeur N11, qui émet une demande d'adhésion sur le réseau épine dorsale. La demande d'adhésion porte sur l'adresse IP multicast associée au groupe G, et a pour destination le nœud d'interconnexion N7.

La demande émise par le nœud destinataire des communications multicast (N11) est acheminée vers le nœud source des communications multicast (N7) par une route (N10, N1 et N2) déterminée à partir de l'adresse IP de destination de la demande d'adhésion (N7) en empruntant le plus court chemin possible. Cette route est déterminée par les protocoles IP de routage connus de l'état de l'art. Cependant, le procédé selon l'invention se distingue de l'état de l'art en ce que la transmission sur au moins un lien de la demande d'adhésion est réalisée en utilisant une adresse point-à-multipoint, c'est-à-dire en utilisant comme adresse MAC de destination du paquet sur le bond non pas l'adresse MAC du deuxième nœud du bond mais l'adresse MAC du sous-réseau.

Ainsi, dans la figure 3, la demande d'adhésion émise par N11 est transmise à N10 dans un paquet ayant comme adresse MAC de destination non pas l'adresse MAC du nœud N10, mais l'adresse MAC du sous-réseau SR1 auquel les nœuds N10, N11, N12 et N13 appartiennent.

Le nœud N11 n'ayant pas de capacité de diffusion point-à-multipoint (les transmissions réalisées depuis N11 en utilisant l'adresse MAC de destination du sous-réseau ne sont reçues que par le nœud N10), cette étape n'apporte rien en soit à la diffusion de la demande d'adhésion. Cependant, l'arbre de routage des données multicast est construit à l'inverse du chemin parcouru par la demande d'adhésion. Les bonds réalisés sur le lien reliant le nœud N7 et le nœud N11 seront donc opérés par des liens point-à-point, utilisant à chaque bond l'adresse MAC du nœud de destination dans le bond, à l'exception du bond reliant N10 à N11, qui sera opéré par un lien point-à-multipoint, utilisant comme adresse de destination de niveau 2 l'adresse du sous-réseau auquel ces deux nœuds appartiennent, c'est-à-dire l'adresse MAC de SR1. De ce fait, l'ensemble des nœuds appartenant au réseau SR1 en capacité de recevoir les émissions de N10, c'est-à-dire les nœuds N11, N12 et N13, reçoivent simultanément les données multicast.

En pratique, la demande d'adhésion est routée entre deux nœuds selon une liaison radio point-à-multipoint dès que le nœud recevant le message est le nœud ayant la plus grande capacité diffusante du sous-réseau, ce qui est le cas dans l'exemple pour le nœud N10. Dans le cas où plusieurs nœuds du sous-réseau ont la capacité diffusante maximum du sous-réseau, une règle de priorité connue de l'ensemble des nœuds du sous-réseau est établie, qui permet de déterminer lequel parmi ces nœuds doit être atteint en utilisant un lien point-à-multipoint. En effet, le principe de l'acheminement point-à-multipoint au lieu de point-à-point ne peut s'appliquer qu'auprès d'un seul nœud du sous-réseau sans risque de duplication du message, et éventuellement de bouclage. C'est pourquoi les transmissions point-à-multipoint au sein d'un sous-réseau ne peuvent se faire que vers un seul nœud du sous-réseau. La règle de priorité permettant la sélection du nœud peut être n'importe quelle règle du moment qu'elle permet de sélectionner un nœud parmi plusieurs nœuds disposant de la même capacité diffusante. Ainsi, il peut s'agir d'une sélection planifiée, d'une sélection faite à partir de l'adresse MAC du nœud, d'une sélection faite à partir du nombre de voisins à un bond, ou de n'importe quel autre critère, du moment que la règle est connue de tous les nœuds du sous-réseau.

Dans l'exemple de la figure 3, le nœud N1 ne dispose pas de capacité diffusante au sein du sous-réseau SR5, alors qu'il en dispose au sein du sous-réseau SR2. Il sera joint par N10 en utilisant la liaison point-à-point reliant N10 à N1.

De manière identique, les bonds reliant N1 à N2 et N2 à N7 sont assurés par des liaisons point-à-point, les nœuds destination de chaque bond n'ayant pas de capacité diffusante.

Lorsque les équipements Tr2 et Tr3 souhaitent rejoindre le groupe G, ils procèdent de manière identique.

La demande d'adhésion émise par le nœud N13 pour le compte de Tr2 utilisera un lien point-à-multipoint pour rejoindre N13, c'est-à-dire que l'adresse de destination de niveau 2 de la demande d'adhésion sur ce bond sera l'adresse MAC du sous-réseau SR1.

De même, la demande d'adhésion émise par le nœud N4 pour le compte de Tr3 utilisera un lien point-à-multipoint pour rejoindre N1, en utilisant l'adresse MAC du sous-réseau SR2.

L'ensemble des chemins des demandes d'adhésion à une adresse IP multicast auprès d'un nœud source permettent d'établir l'arbre de diffusion du flux de données multicast émis par ce nœud source sur le réseau épine dorsale, en mutualisant les chemins qui peuvent l'être. En pratique, l'arbre de diffusion n'a pas de réalité concrète. Il correspond à la somme des informations contenues dans les tables de routage des différents nœuds du réseau. Ainsi, chaque nœud par lequel transite la demande d'adhésion met à jour ses tables de routage en fonction de la manière dont il a reçu la demande d'adhésion, de manière à ce qu'un flux provenant du nœud source mentionné dans la demande d'adhésion (dans l'exemple N7) émis à destination de l'adresse IP multicast mentionnée dans la demande d'adhésion, soit transmis par le chemin inverse de la demande d'adhésion.

Lorsque le chemin emprunté par la demande d'adhésion pour parvenir à un nœud est une liaison point-à-point, comme c'est le cas par exemple entre N1 et N10, le nœud recevant la demande d'adhésion (N1), configure ses tables de routage pour retransmettre les flux de données qu'il reçoit dont la source est N7 et la destination une adresse IP multicast donnée à l'inverse de la demande d'adhésion, c'est à dire dans une transmission point-à-point à destination du nœud lui ayant transmis la demande d'adhésion, dans l'exemple N10.

Lorsque le chemin emprunté par la demande d'adhésion pour parvenir à un nœud est une liaison point-à-multipoint, comme c'est le cas par exemple entre N10 et N11, le nœud recevant la demande d'adhésion, (N10), configure ses tables de routage pour retransmettre les flux de données qu'il reçoit dont la source est N7 et la destination une adresse IP multicast donnée à l'inverse de la demande d'adhésion, c'est-à-dire dans une transmission point-à-multipoint à destination de l'adresse MAC du sous-réseau auquel les deux nœuds appartiennent (SR1).

Lorsqu'une demande d'adhésion pour un même flux de données multicast et une même source parvient plusieurs fois au même nœud par des liens point-à-multipoint, comme c'est le cas dans l'exemple pour N10 depuis N11 et N13, alors la table de routage n'est mise à jour qu'une seule fois. Cependant, le nœud N10 tient un registre du nombre d'équipements ayant réalisé la demande d'adhésion de manière à ne supprimer l'information de sa table de routage que lorsque tous les nœuds ayant adhéré ont résilié.

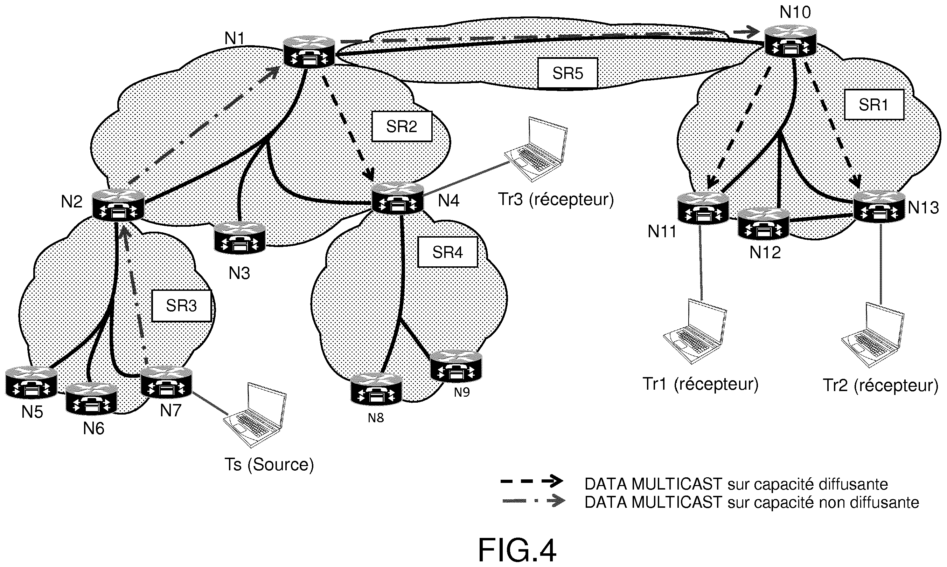

La figure 4 représente les chemins parcourus par les flux de données multicast transmis dans un réseau dans lequel a été mis en œuvre un procédé de routage d'une demande d'adhésion dans un réseau épine dorsale tel que celui décrit en figure 3.

Lorsque le nœud Ts émet un flux de donnés multicast à destination du groupe G, celui-ci est diffusé au sein de la bulle radio à laquelle appartient Ts vers le nœud d'interconnexion N7. A partir des données contenues dans ses tables de routage établies suite à la réception de la demande d'adhésion, N7 retransmet le flux de données par une liaison point-à-point vers N2, en utilisant comme adresse de destination de niveau 2 pour ce bond l'adresse MAC du nœud N2. Le même processus est répété lors des deux bonds suivants par N2 et N1, jusqu'à atteindre le nœud N10. A partir des données contenues dans ses tables de routage, établies suite à la réception des demandes d'adhésion émises par N11 et N13, le nœud N10 va retransmettre le flux de données en utilisant sa capacité de diffusion point-à-multipoint sur le sous-réseau SR1. Le flux de données est alors reçu à la fois par N11 et N13, ce qui permet de diviser par deux la charge sur le sous-réseau SR1 par rapport au routage multicast de l'état de l'art.

Les nœuds N11 et N13 retransmettent le flux de données multicast sur les bulles radios de Tr1 et Tr2.

A noter que le nœud N1 est configuré pour retransmettre les flux qu'il reçoit de N7 pour le groupe G sur le sous-réseau SR5 vers N10, mais également sur le sous-réseau SR2 vers N4, par une transmission point-à-multipoint. N4 retransmet le flux sur la bulle radio auquel il est relié, ce qui permet à Tr3 d'également recevoir le flux.

L'invention porte donc sur un procédé de routage d'une demande d'adhésion au sein d'un réseau, et plus particulièrement au sein d'un réseau ad-hoc. Elle porte également plus généralement sur un procédé de routage d'un flux de données multicast au sein d'un réseau de communications.

Selon le type de réseau, plusieurs mises en œuvre différentes de l'invention sont possibles.

Une première mise en œuvre de l'invention s'applique plus particulièrement lorsque le réseau de communications a une topologie fixe ou prédictive. Chaque nœud a connaissance des capacités diffusantes des autres nœuds avec lesquels il constitue un sous-réseau. Il est alors facile de déterminer au sein de chaque sous-réseau le nœud ayant la plus grande capacité diffusante, vers lequel les messages d'adhésion doivent être transmis sur un lien point-à-multipoint. Les messages d'adhésion sont retransmis auprès des autres nœuds du sous-réseau par des liens point-à-point.

L'appartenance des équipements hors réseau épine dorsale aux différentes bulles radios et aux différents groupes pouvant varier au cours du temps, les nœuds du réseau doivent partager et mettre à jour les informations de connexion du réseau avec les différentes bulles radios. Pour ceci, les nœuds d'interconnexion procèdent à la découverte des bulles radios avec lesquels ils sont connectés et des différents groupes qui composent ces bulles radios. Cette découverte est faite au niveau de la couche IP, selon des techniques bien connues de l'homme du métier.

Cette information est ensuite propagée à l'ensemble des nœuds du réseau épine dorsale, afin de permettre aux nœuds d'interconnexion d'effectuer les demandes d'adhésion. Un nœud d'interconnexion effectue une demande d'adhésion vers un autre nœud d'interconnexion si et seulement si ils ont un nœud membre du groupe présent dans la bulle radio à laquelle ils sont rattachés.

La mise en œuvre du procédé de routage d'une demande d'adhésion selon l'invention est alors réalisée tel que décrit à la figure 3 : la route suivie par la demande d'adhésion entre deux nœuds d'interconnexion du réseau est déterminée par des protocoles IP comme étant la route la plus courte reliant ces deux points. Sur cette route, à chaque bond, lorsque le nœud destinataire du bond est celui disposant de la plus grande capacité de diffusion point-à-multipoint du sous-réseau, et, en cas d'égalité avec un autre sous-réseau, lorsqu'il satisfait une règle de priorité, le lien est opéré par une transmission point-à-multipoint, en utilisant l'adresse MAC du sous-réseau comme adresse de destination de niveau 2. Sinon, le nœud est acheminé par une transmission point-à-point.

Le routage d'un flux de données multicast entre deux nœuds d'interconnexion d'un réseau de communication selon l'invention comprend donc :
- le routage d'une demande d'adhésion au flux de données multicast, initiée par le nœud d'interconnexion de destination vers le nœud d'interconnexion de source, faite en utilisant le procédé de routage d'une demande d'adhésion décrit précédemment,
- l'ajout du chemin inverse de celui parcouru par la demande d'adhésion à un arbre de diffusion du flux de données multicast, l'arbre étant vide lors de l'initialisation du réseau. Comme indiqué précédemment, l'arbre de diffusion est réparti sur l'ensemble du réseau à travers les tables de routage des différents nœuds. Il permet de mutualiser les chemins parcouru par le même flux de données multicast à destination de nœuds d'interconnexion différents. L'invention permet de plus de mutualiser des chemins supplémentaires en exploitant les capacités de diffusion radio des nœuds du réseau,
- la diffusion du flux de données multicast émis par le premier nœud, en utilisant l'arbre de diffusion calculé.

Les demandes de résiliation aux flux de données multicast sont faites à l'identique des demandes d'adhésion, les nœuds parcouru par les flux ne supprimant les entrées associées de leur table de routage que lorsque tous les nœuds ont résilié.

Une deuxième mise en œuvre de l'invention s'applique plus particulièrement lorsque le réseau de communications a une topologie pouvant évoluer, tel qu'un réseau ad-hoc.

Les procédés de routage d'une demande d'adhésion et de routage d'un flux de données multicast sont semblables à ceux présentés dans le cadre de la première mise en œuvre de l'invention, si ce n'est que le procédé de routage de la demande d'adhésion comprend en outre une première étape, préalable à la transmission de la demande d'adhésion, de découverte des capacités diffusantes des nœuds du réseau.

En effet, la mise en œuvre du procédé selon l'invention requiert de chaque nœud appartenant à un sous-réseau qu'il ait connaissance de la capacité diffusante point-à-multipoint des autres nœuds avec lesquels il partage le sous-réseau.

La découverte des capacités diffusantes est faite via un protocole de découverte de topologie de l'état de l'art. Elle est locale au sous-réseau. Pour ceci, les nœuds vont tour à tour émettre un message point-à-multipoint, les nœuds ayant reçu le message répondant alors par une transmission point-à-point. Cette information de capacité diffusante est ensuite diffusée sur l'ensemble du sous-réseau.

Une troisième mise en œuvre de l'invention s'applique plus particulièrement dans un réseau comprenant un nœud « point de rendez-vous » (plus connu en anglais sous le nom de « Rendez-vous Point », ou RP). Cette mise en œuvre présente l'avantage que le procédé de routage de la demande d'adhésion ne requiert pas le partage des informations de connexion du réseau avec les différentes bulles radios.

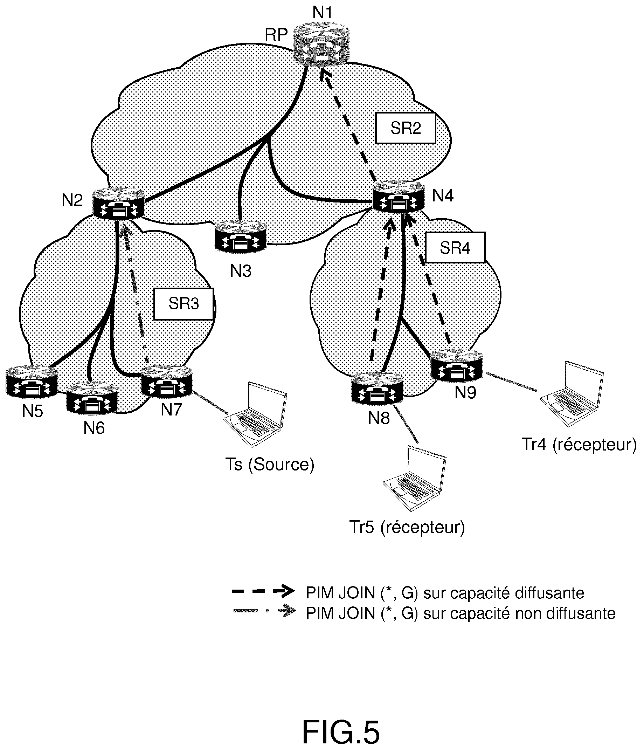

Dans cette mise en œuvre, illustrée à la figure 5, un nœud spécifique joue le rôle de point de rendez-vous. Dans l'exemple, c'est le cas du nœud N1.

Ainsi, lorsqu'un nœud transmet une demande d'adhésion à un flux de données multicast, il ne spécifie pas la source du flux de données. La demande d'adhésion est transmise au point de rendez-vous selon le procédé décrit par l'invention prenant en compte les capacités de diffusion point-à-multipoint des nœuds placés sur le chemin des données. Dans l'exemple de la figure 5, la demande d'adhésion est initiée par le nœud N9 pour le compte de l'équipement Tr4. Elle est transmise au nœud N4 par une transmission point-à-multipoint, puis au point de rendez-vous N1, également par une transmission point-à-multipoint. Une autre demande est également transmise par une transmission point-à-multipoint depuis N8 vers N4 puis N1 pour le compte de Tr5. L'arbre de diffusion du flux de données ayant pour source N1 est alors construit.

Cette mise en œuvre nécessite donc que les nœuds d'un sous-réseau connaissent la capacité diffusante des autres nœuds partageant le même sous-réseau. Cette connaissance peut être programmée dans le cas d'un réseau statique, ou découverte dans le cas d'un réseau ad-hoc.

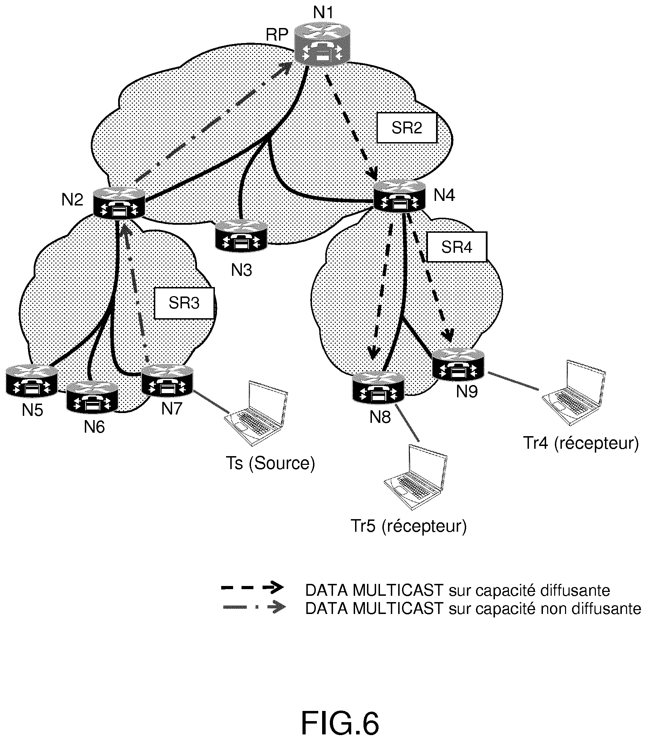

La figure 6 illustre le chemin parcouru par les flux de données multicast dans ce mode de réalisation.

Le nœud source N7 transmet tous ses flux de données multicast au nœud point de rendez-vous N1, par des liaisons point-à-point N7 vers N2 et N2 vers N1.

Lorsque le nœud point de rendez-vous reçoit d'une part un flux de données multicast, et d'autre part une demande d'adhésion au même flux de données multicast, il retransmet le flux de données multicast vers le ou les nœuds ayant transmis la demande d'adhésion (dans l'exemple N9 et N8 pour Tr4 et Tr5) en utilisant l'arbre de diffusion construit à l'inverse du chemin suivi par la demande d'adhésion. De ce fait, sur le sous-réseau SR4, la transmission ne se fait qu'une seule fois, par une transmission point-à-multipoint, optimisant ainsi la charge sur ce sous-réseau.

Lorsque N9 reçoit le flux de données multicast auquel il a adhéré, il connait alors la provenance du flux (N7) et peut initier une nouvelle demande d'adhésion, en spécifiant cette fois-ci la source (N7), ce qui permet au flux de données de contourner le point de rendez-vous (N1) lorsqu'il existe un chemin plus court. Un nouvel arbre de diffusion est alors généré en conséquence.

Enfin, une quatrième mise en œuvre de l'invention s'applique particulièrement lorsque le réseau de communications comprend un nœud « point de rendez-vous » ayant des capacités de diffusion point-à-multipoint, et lorsque les nœuds n'ont pas connaissance des capacités de diffusantes des autres noeuds, et qu'ils ne peuvent les découvrir.

Ce mode de réalisation tire parti du fait que le nœud point de rendez-vous a des capacités de diffusion connues, comme c'est le cas par exemple pour un concentrateur dans un réseau satellitaire en étoile : le concentrateur se trouve à la croisée des chemins de la plupart des communications, et dispose de capacités de diffusion connues.

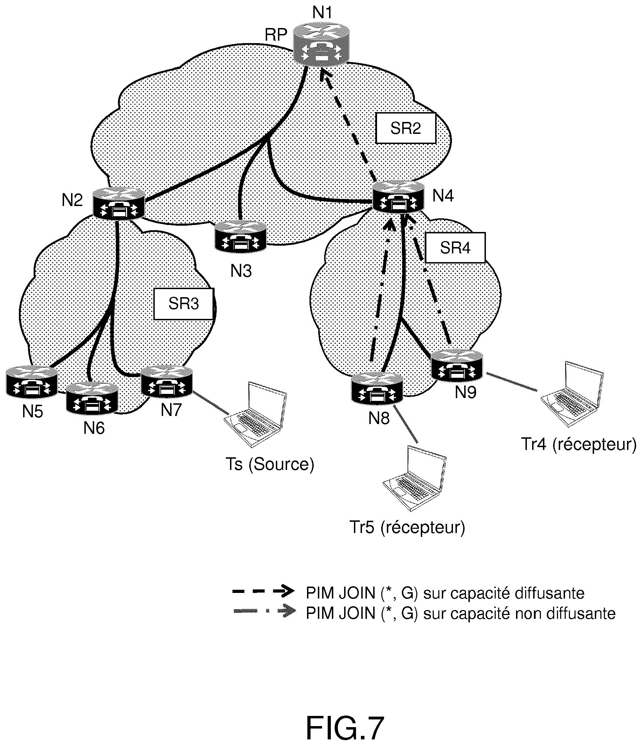

Le routage d'une demande d'adhésion dans cette mise en œuvre de l'invention est illustrée en figure 7. Les tables de routage de tous les nœuds voisins du nœud du point de rendez-vous, c'est-à-dire des équipements pouvant atteindre ce point de rendez-vous en un bond, sont configurées pour positionner un bond statique vers le point de rendez-vous opéré par un lien point-à-multipoint pour les flux de données multicast. Dans l'exemple de la figure 7, où le point de rendez-vous est le nœud N1, les tables de routage des nœuds N2, N3 et N4 sont configurées pour retransmettre les flux de données multicast par des liens point-à-multipoint en utilisant l'adresse MAC du sous-réseau SR2.

Les procédés de routage des demandes d'adhésion et des flux de données multicast sont alors identiques à ceux décrits pour la troisième mise en œuvre, si ce n'est qu'ils ne comprennent pas d'étape de découverte des capacités diffusante des autres nœuds des sous-réseaux. De par l'utilisation d'un point de rendez-vous, ils ne nécessitent pas non plus la connaissance des informations de connexion du réseau avec les différentes bulles radios. Ainsi, une demande d'adhésion émise par N9 pour Tr5 et par N8 pour Tr4 sera transmise par une liaison point-à-point entre N9 et N4 et une autre liaison point-à-point entre N8 et N4, car la capacité diffusante de N4 est inconnue de N8 et de N9. La transmission entre N4 et N1 emprunte un lien de diffusion point-à-multipoint défini de manière statique comme étant le seul chemin possible dans la table de routage de N4.

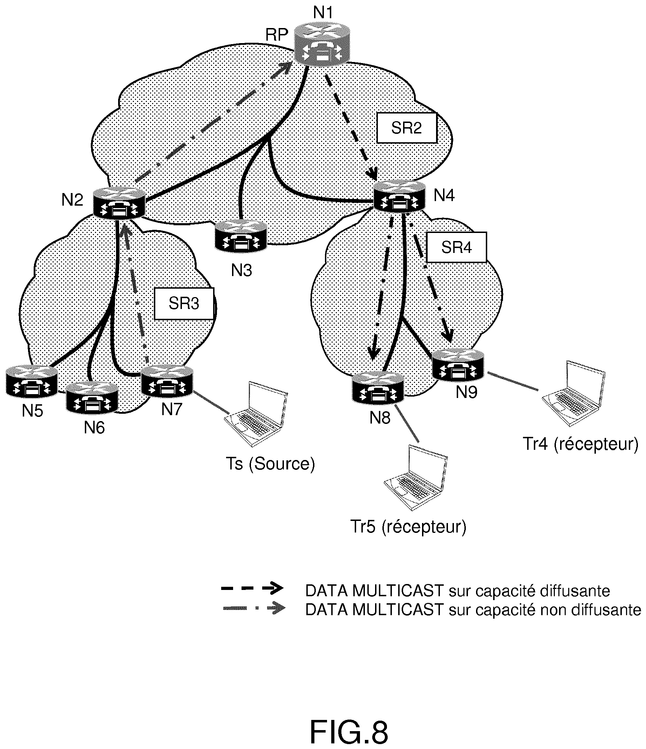

Le routage des données dans ce mode de réalisation est illustré en figure 8. Tout comme dans le troisième exemple de mise en œuvre, les données sont transmises depuis le nœud source (N7) vers le nœud point de rendez vous (N1) par des liens point-à-point, et retransmis par N1 selon le chemin inverse de la demande d'adhésion, c'est-à-dire en utilisant la liaison point-à-multipoint entre N1 et N4, ce qui est avantageux lorsque des membres du même groupe appartiennent à d'autres sous-réseaux. Les liaisons entre N4 et N9 et entre N4 et N8 suivant les chemins inverses des demandes adhésions, elles empruntent des liens de transmission point-à-point.

Contrairement au procédé de routage des flux de données multicast de la troisième mise en œuvre, lorsque le nœud destinataire du flux de données multicast (dans l'exemple N9) reçoit le flux multicast et a connaissance de son origine (dans l'exemple N7), il ne doit pas initier de nouvelle demande d'adhésion à destination de N7. En effet, les capacités diffusantes des nœuds étant inconnues, le chemin parcouru par les données, s'il devait éviter le nœud point de rendez-vous, serait uniquement fait de liaisons point-à-point, et ne bénéficierait donc pas des avantages du procédé de routage des flux multicast selon l'invention.

Le procédé de routage des demandes d'adhésion selon l'invention, et le procédé de routage des flux de données multicast qui lui est associé, visent à optimiser les ressources radio sous jacentes du réseau radio épine dorsale en aiguillant les demandes d'adhésion sur des liens radio broadcast lorsque cela a un intérêt. Il présente de nombreux avantages par rapport aux procédés connus de l'état de l'art :
- il est compatible des protocoles de formation de groupes connus,
- il est compatible des mécanismes de routage multicast connus. En effet, il ne modifie pas le principe du routage multicast et de construction des arbres de diffusion, qui se font au niveau de la couche IP, car il opère au niveau des liens radio utilisés lorsque c'est possible et avantageux. Ces modifications portent alors sur la couche MAC des transmissions uniquement, et n'affectent pas la couche IP. Il est en particulier compatible des mécanismes de routage multicast existants, tels que le mécanisme PIM, et la formation d'arbres de diffusion par Reverse Path Forwarding,
- il est compatible de n'importe quel type de transmission ayant une capacité diffusante,
- il permet de réduire la charge sur le réseau, en particulier sur le réseau épine dorsale.

De plus, le procédé de routage des flux de données multicast selon l'invention est compatible d'une optimisation telle que celle décrite dans la demande de brevet Européenne EP 3 247 076 A1 portant sur un système et procédé de traitement de données utilisant des codes fontaines pour l'émission et la reconstruction des flux de données. Les flux de données sont transmis sous la forme de suite de segments selon une pluralité de chemins de transmission.

A l'intérieur des bulles radios, les flux de données sont relayés par les nœuds en utilisant le procédé de traitement des données décrit dans la demande de brevet EP 3 247 076 A1.

A l'intérieur du réseau épine dorsale, les flux de données sont relayés par segments, en utilisant le procédé de routage des flux de données multicast selon l'invention.

La retransmission d'un flux de données multicast depuis une bulle radio vers le réseau épine dorsale est réalisé par un nœud d'interconnexion. Ceux-ci reconstituent le flux de données multicast à partir des segments reçus depuis la bulle radio. Le flux de données multicast reçu est émis dans le réseau épine dorsale en procédant de la même manière qu'un nœud de bulle radio du brevet EP 3 247 076 A1.

Le relayage d'un flux de données multicast depuis le réseau épine dorsale vers une bulle radio est réalisé par un nœud d'interconnexion. Celui-ci reconstitue le flux de données multicast à partir des segments reçus du réseau épine dorsale, puis les segmente afin de les diffuser dans la bulle radio, en utilisant le procédé de diffusion par recombinaison de la demande EP 3 247 076 A1, ce qui permet de réduire les temps de réception lorsqu'un nœud appartient à deux ou plus bulles radio, ou lorsqu'il reçoit des paquets segmentés d'un même flux de données d'une part par diffusion au sein de la bulle radio à laquelle il appartient, et d'autre part par un nœud d'interconnexion.

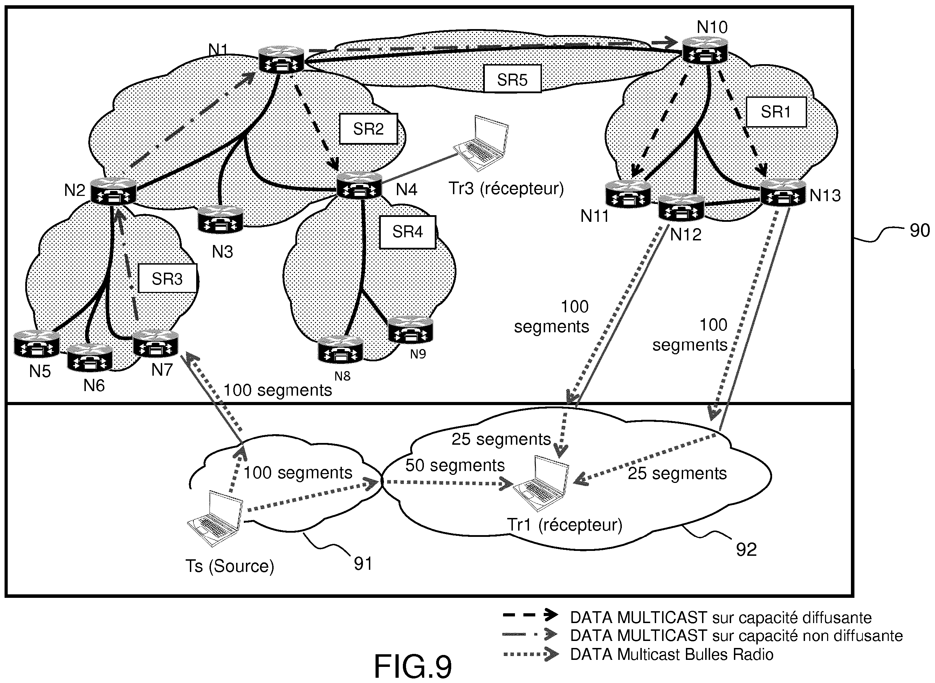

La figure 9 illustre la mise en œuvre d'un mode de réalisation d'un procédé de routage d'un flux multicast dans un réseau ad-hoc selon l'invention, lorsqu'il est mis en œuvre avec les enseignements de la demande de brevet EP 3 247 076 A1. Le réseau présente un réseau épine dorsale 90 et plusieurs bulles radio (91, 92). Les bulles radio sont reliées entre elles par l'intermédiaire du réseau épine dorsale. Certaines de ces bulles sont connexes : elles comprennent des nœuds communs qui leur permettent d'échanger des données.

Les flux multicast sont transmis sous la forme d'une pluralité de segments. Dans l'exemple, le flux de données à transmettre comporte 100 segments. Ces segments peuvent entrer et sortir dans le réseau épine dorsale simultanément depuis plusieurs nœuds d'interconnexion. L'arbre de diffusion du réseau épine dorsale va permettre de diffuser efficacement les segments vers tous les nœuds d'interconnexion impactés par un groupe multicast G et chaque nœud d'interconnexion va pouvoir effectuer l'ensemble des opérations décrites dans la demande de brevet EP 3 247 076 A1.

Il est ainsi possible d'étendre le procédé décrit dans la demande EP 3 247 076 A1 au sein de bulles radio connexes et/ou non connexes : les segments générés par le nœud source Ts sont transmis au nœud destination Tr1 à la fois par le biais du réseau d'interconnexion, et par les nœuds connexes aux deux bulles radio 91 et 92. La diffusion depuis le réseau d'interconnexion et la bulle radio peut se faire grâce à plusieurs nœuds d'interconnexion. Ainsi, le flux de données multicast peut être reconstitué à partir des segments reçus depuis les nœuds d'interconnexion et les nœuds connexes (dans l'exemple de la figure 9, Tr1 reçoit 50 segments depuis un nœud d'interconnexion, et 25 segments depuis chacun des deux nœuds d'interconnexion N12 et N13), réduisant ainsi les temps nécessaires à la réception de l'ensemble du flux de données, améliorant ainsi les performances globales du réseau.

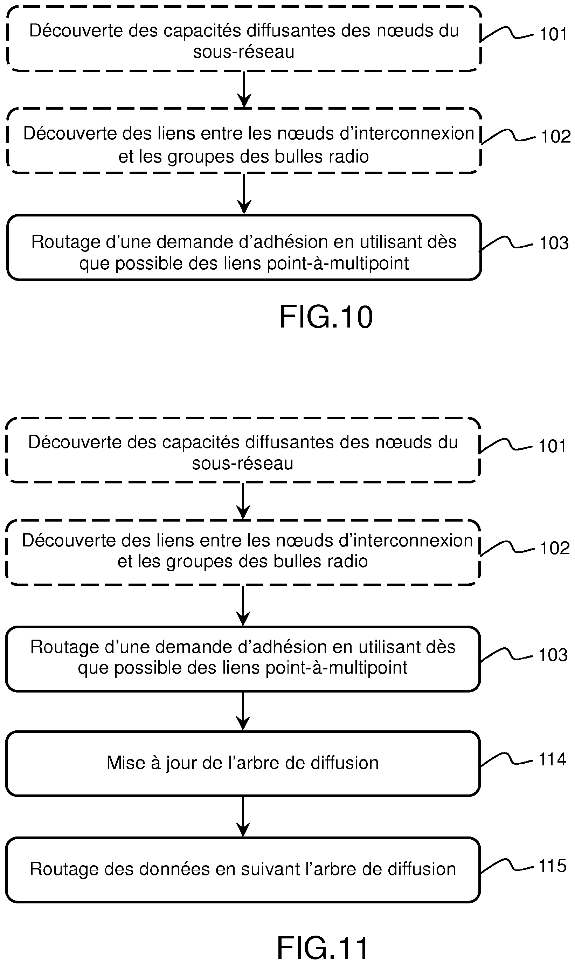

La figure 10 est une représentation sous la forme d'un diagramme d'état des étapes d'un mode de réalisation du procédé selon l'invention de routage d'une demande d'adhésion dans un réseau de communications.

Le procédé comprend une première étape 101, optionnelle, de découverte des capacités diffusantes point-à-multipoint des nœuds au sein des sous-réseaux. Cette étape n'est pas nécessaire lorsque les nœuds du sous-réseau ont connaissance des capacités diffusantes des autres nœuds du sous-réseau (comme c'est le cas dans la première mise en œuvre décrite), ou lorsque le déploiement du réseau utilise des liens routés statiquement selon la voie broadcast (comme c'est le cas dans la troisième mise en œuvre décrite).

Le procédé comprend ensuite une deuxième étape 102, elle aussi optionnelle, de découverte par les nœuds du réseau des liens entre les nœuds d'interconnexion du réseau et les groupes des bulles radios auxquelles ils sont connectés. Cette étape permet de déterminer le chemin devant être parcouru par un nœud d'interconnexion souhaitant souscrire à un flux multicast, et met en œuvre des protocoles IP de routage des flux. Elle n'est pas nécessaire lorsque le routage se fait à destination d'un nœud point de rendez-vous, comme c'est le cas dans les troisième et quatrième mises en œuvre décrites.

Enfin, le procédé comprend une troisième étape 103 de routage d'une demande d'adhésion entre un nœud désirant adhérer à un flux de données multicast et un nœud par lequel provient le flux de données multicast dans le réseau. La route suivie par les flux de données multicast est donnée par les tables de routage des différents nœuds du réseau. Le routage comprend la transmission de la demande d'adhésion par bonds successifs entre des nœuds voisins du réseau de communications, c'est-à-dire des nœuds pouvant communiquer en un seul bond, ces nœuds faisant alors nécessairement partie d'un même sous-réseau. Les bonds sont assurés par l'utilisation de la capacité de diffusion point-à-multipoint lorsque le nœud destinataire du bond est le nœud ayant la plus forte capacité diffusante du sous-réseau comprenant les deux nœuds acteurs du bond, et en cas d'égalité, satisfait une règle de priorité, ou lorsque cette propriété est inscrite de manière statique dans les tables de routage des nœuds impliqués dans le bond. La transmission broadcast se fait alors en utilisant comme adresse de destination de niveau 2 du message d'adhésion l'adresse MAC du sous-réseau auquel les deux nœuds impliqués dans le bond appartiennent.

La figure 11 est une représentation sous la forme d'un diagramme d'état des étapes d'un mode de réalisation du procédé selon l'invention de routage d'un flux de données multicast dans un réseau de communications.

Ce procédé comprend les trois étapes 01, 102 et 103 (dont deux optionnelles) du routage d'une demande d'adhésion au sein du réseau de communications selon l'invention entre le nœud destinataire du flux de données point-à-multipoint et le nœud source du flux ou le nœud point de rendez-vous.

Il comprend en outre une étape 114 de mise à jour de l'arbre de diffusion du flux de données multicast. Cette mise à jour se fait par programmation des tables de routage des différents nœuds parcouru par la demande d'adhésion, de manière à ce qu'ils retransmettent les données issue du nœud d'interconnexion source du flux multicast (ou le nœud point de rendez-vous) en suivant les chemins inverses des chemins parcourus par la demande d'adhésion, ce qui sous-entend que la voie point-à-multipoint est utilisée entre deux nœuds dès lors que cette voie a été utilisée par la demande d'adhésion.

Il comprend enfin une étape 115 de transmission des flux de données multicast en suivant les chemins définis par l'arbre de diffusion mis à jour à l'étape précédente.

Toutes les étapes du procédé peuvent être exécutées à nouveau de manière régulière, ou lorsque des évènements particuliers se produisent dans le réseau, de manière à suivre les évolutions de la topologie du réseau épine dorsale, et des bulles radios auxquelles il est connecté, et remettre à jour l'arbre de diffusion

## Revendications

1. Procédé de routage d'une demande d'adhésion à un flux de données multicast faite par un premier nœud (N11) auprès d'un deuxième nœud (N7) dans un réseau de communications comprenant au moins un sous-réseau (SR1 à SR5), chaque sous-réseau comprenant au moins deux nœuds voisins du réseau de communications, une adresse MAC étant associée à chaque nœud (N1 à N13) du réseau de communications et une adresse MAC étant associée à chaque sous-réseau (SR1 à SR5) du réseau de communications, le procédé de routage comprenant des étapes successives de transmission (103) de la demande d'adhésion entre des nœuds voisins du réseau de communications selon une route reliant le premier nœud au deuxième nœud, le procédé étant **caractérisé en ce que** la transmission de la demande d'adhésion entre des nœuds voisins (N11 - N10) d'un sous-réseau utilise une liaison radio point-à-multipoint lorsque le nœud destination de la transmission dans le sous-réseau est le nœud ayant la plus grande capacité diffusante dans le sous-réseau, et, en cas d'égalité avec un autre nœud du sous-réseau, lorsque le nœud destination de la transmission dans le sous-réseau satisfait une règle de priorité, la transmission de la demande d'adhésion entre des nœuds voisins (N11 - N10) d'un sous-réseau utilisant une liaison point-à-point sinon.

2. Procédé de routage d'une demande d'adhésion selon la revendication 1, dans lequel ladite liaison radio point-à-multipoint utilise comme adresse de destination de niveau 2 l'adresse MAC du sous-réseau (SR1) auquel lesdits nœuds voisins appartiennent.

3. Procédé de routage d'une demande d'adhésion selon l'une des revendications précédentes, comprenant en outre une étape préliminaire (101), réalisée par les nœuds du réseau participant à la transmission de la demande d'adhésion, de découverte des capacités diffusantes de l'ensemble des nœuds des sous-réseaux auxquels ils appartiennent.

4. Procédé de routage d'une demande d'adhésion selon l'une des revendications précédentes, comprenant en outre une étape préliminaire (102) de découverte, par les nœuds du réseau, des bulles radios auxquelles le réseau est connecté par des nœuds d'interconnexion, et des groupes appartenant à ces bulles radios.

5. Procédé de routage d'une demande d'adhésion selon la revendication 1, dans laquelle l'étape de transmission de la demande d'adhésion entre des nœuds voisins utilisant une liaison radio point-à-multipoint est réalisée en définissant de manière statique les chemins parcourus par les demandes d'adhésion à destination d'un nœud point de rendez-vous du réseau de communications.

6. Procédé de routage d'un flux de données multicast entre un premier nœud (N7) et un deuxième nœud (N11) dans un réseau de communications comprenant au moins un sous-réseau (SR1 à SR5), chaque sous-réseau comprenant au moins deux nœuds voisins du réseau de communications, une adresse MAC étant associée à chaque nœud du réseau et une adresse MAC étant associée à chaque sous-réseau, **caractérisée en ce qu'**il comprend les étapes de :
- routage (103) d'une demande d'adhésion au flux de données multicast entre ledit deuxième nœud (N11) et ledit premier nœud (N7) par un procédé de routage d'une demande d'adhésion selon l'une des revendications 1 à 5,
- ajout (114) du chemin inverse du trajet parcouru par ladite demande d'adhésion à un arbre de diffusion du flux de données multicast émis depuis le premier nœud,
- diffusion du flux de données multicast (115) dans le réseau de communications depuis le premier nœud vers le deuxième nœud en suivant les chemins définis par l'arbre de diffusion.

7. Procédé de routage d'un flux de données multicast selon la revendication 6, **caractérisé en ce que** l'étape de diffusion du flux de données multicast utilise un procédé de diffusion par recombinaisons.

8. Procédé de routage d'un flux de données multicast selon l'une des revendications 6 et 7, dans lequel ledit premier nœud (N7) et ledit deuxième nœud (N8, N9) sont des nœuds d'interconnexion du réseau avec des bulles radios différentes comprenant des terminaux utilisateurs (Ts, Tr1, Tr2) appartenant à un même groupe d'utilisateurs.

9. Procédé de routage d'un flux de données multicast selon l'une des revendications 6 et 7, dans lequel ledit premier nœud est un nœud point de rendez-vous (RP), et ledit deuxième nœud est un nœud d'interconnexion du réseau avec au moins une bulle radio (N8, N9).

10. Procédé de routage d'une demande de résiliation à un flux de données multicast faite par un premier nœud (N11) auprès d'un deuxième nœud (N7) dans un réseau de communications comprenant au moins un sous-réseau (SR1 à SR5), chaque sous-réseau comprenant au moins deux nœuds voisins du réseau de communications, une adresse MAC étant associée à chaque nœud (N1 à N13) du réseau de communications et une adresse MAC étant associée à chaque sous-réseau (SR1 à SR5) du réseau de communications, le procédé de routage comprenant des étapes successives de transmission (103) de la demande de résiliation entre des nœuds voisins du réseau de communications selon une route reliant le premier nœud au deuxième nœud, le procédé étant **caractérisé en ce que** la transmission de la demande de résiliation entre des nœuds voisins (N11-N10) d'un sous réseau utilise une liaison radio point-à-multipoint lorsque le nœud destination de la transmission dans le sous-réseau est le nœud ayant la plus grande capacité diffusante dans le sous-réseau, et, en cas d'égalité avec un autre nœud du sous-réseau, lorsque le nœud destination de la transmission dans le sous-réseau satisfait une règle de priorité, la transmission de la demande de résiliation entre des nœuds voisins (N11-N10) d'un sous-réseau utilisant une liaison point-à-point sinon.

11. Réseau de communications comprenant au moins un sous-réseau (SR1 à SR5), chaque sous-réseau comprenant au moins deux nœuds voisins du réseau (N10, N11), une adresse MAC étant associée à chaque nœud du réseau et une adresse MAC étant associée à chaque ensemble de nœuds formant un sous-réseau, les nœuds du réseau étant configurés pour transmettre une demande d'adhésion à un flux de données faite par un premier nœud (N11) auprès d'un deuxième nœud (N7) du réseau de communications par des étapes successives de transmission de la demande entre des nœuds voisins du réseau de communications selon une route reliant le premier nœud au deuxième nœud, **caractérisé en ce que** les nœuds du réseau de communications impliqués dans la transmission de la demande d'adhésion entre deux nœuds voisins (N11-N10) d'un sous-réseau sont configurés pour utiliser une liaison radio point-à-multipoint lorsque le nœud destination de la transmission dans le sous-réseau est le nœud ayant la plus grande capacité diffusante dans le sous-réseau, et, en cas d'égalité avec un autre nœud du sous-réseau, lorsque le nœud destination de la transmission dans le sous-réseau satisfait une règle de priorité, et pour utiliser une liaison point-à-point sinon.

## Patentansprüche

1. Verfahren zum Leiten einer Anhänganforderung an einen Multicast-Datenfluss durch einen ersten Knoten (N11) bei einem zweiten Knoten (N7) in einem Kommunikationsnetzwerk, das mindestens ein Teilnetz (SR1 bis SR5) umfasst, wobei jedes Teilnetz mindestens zwei Nachbarknoten des Kommunikationsnetzwerks umfasst, wobei eine MAC-Adresse mit jedem Knoten (N1 bis N13) des Kommunikationsnetzwerks assoziiert ist und eine MAC-Adresse mit jedem Teilnetz (SR1 bis SR5) des Kommunikationsnetzwerks assoziiert ist, wobei das Leitverfahren aufeinanderfolgende Schritte des Übertragens (103) der Anhänganforderung zwischen Nachbarknoten des Kommunikationsnetzwerks gemäß einer Route umfasst, die den ersten Knoten mit dem zweiten Knoten verbindet, wobei das Verfahren **dadurch gekennzeichnet ist, dass** die Übertragung der Anhänganforderung zwischen Nachbarknoten (N11 - N10) eines Teilnetzes eine Punkt-zu-Mehrpunkt-Funkverbindung nutzt, wenn der Zielknoten der Übertragung in dem Teilnetz der Knoten mit der größten Verbreitungskapazität in dem Teilnetz ist, und, im Falle von Gleichheit mit einem anderen Knoten des Teilnetzes, wenn der Zielknoten der Übertragung in dem Teilnetz eine Prioritätsregel erfüllt, die Übertragung der Anhänganforderung zwischen den Nachbarknoten (N11 - N10) eines Teilnetzes eine Punkt-zu-Punkt-Verbindung andernfalls nutzt.

2. Verfahren zum Leiten einer Anhänganforderung nach Anspruch 1, wobei die Punkt-zu-Mehrpunkt-Funkverbindung als Zieladresse von Ebene 2 die MAC-Adresse des Teilnetzes (SR1) benutzt, zu dem die Nachbarknoten gehören.

3. Verfahren zum Leiten einer Anhänganforderung nach einem der vorherigen Ansprüche, das ferner einen Vorabschritt (101), der von den an der Übertragung der Anhänganforderung beteiligten Netzknoten durchgeführt wird, des Erkennens der Verbreitungskapazitäten des Satzes von Knoten der Teilnetze beinhaltet, zu denen sie gehören.

4. Verfahren zum Leiten einer Anhänganforderung nach einem der vorherigen Ansprüche, das ferner einen Vorabschritt (102) des Erkennens, durch die Knoten des Netzwerks, der Funkblasen, mit denen das Netzwerk über die Verbindungsknoten verbunden ist, und von Gruppen beinhaltet, die zu diesen Funkblasen gehören.

5. Verfahren zum Leiten einer Anhänganforderung nach Anspruch 1, wobei der Schritt des Übertragens der Anhänganforderung zwischen Nachbarknoten, die eine Punkt-zu-Mehrpunkt-Funkverbindung nutzen, durch statisches Definieren der von den Anhänganforderungen zu einem Rendezvous-Knotenpunkt des Kommunikationsnetzes durchlaufenen Wege durchgeführt wird.

6. Verfahren zum Leiten eines Multicast-Datenflusses zwischen einem ersten Knoten (N7) und einem zweiten Knoten (N11) in einem Kommunikationsnetzwerk, das mindestens ein Teilnetz (SR1 bis SR5) umfasst, wobei jedes Teilnetz mindestens zwei Nachbarknoten des Kommunikationsnetzes umfasst, wobei eine MAC-Adresse mit jedem Knoten des Netzwerks assoziiert ist und eine MAC-Adresse mit jedem Teilnetz assoziiert ist, **dadurch gekennzeichnet, dass** es die folgenden Schritte beinhaltet:
- Leiten (103) einer Anhänganforderung an den Multicast-Datenfluss zwischen dem zweiten Knoten (N11) und dem ersten Knoten (N7) mit einem Verfahren zum Leiten einer Anhänganforderung nach einem der Ansprüche 1 bis 5,
- Hinzufügen (114) des umgekehrten Weges der von der Anhänganforderung durchlaufenen Bahn zu einem Verbreitungsbaum des vom ersten Knoten ausgesendeten Multicast-Datenflusses,
- Verbreiten des Multicast-Datenflusses (115) in dem Kommunikationsnetzwerk vom ersten Knoten zum zweiten Knoten unter Verfolgung der vom Verbreitungsbaum definierten Wege.

7. Verfahren zum Leiten eines Multicast-Datenflusses nach Anspruch 6, **dadurch gekennzeichnet, dass** der Schritt des Verbreitens des Multicast-Datenflusses ein Verbreitungsverfahren durch Neukombinationen nutzt.

8. Verfahren zum Leiten eines Multicast-Datenflusses nach einem der Ansprüche 6 und 7, wobei der erste Knoten (N7) und der zweite Knoten (N8, N9) Verbindungsknoten des Netzwerks mit unterschiedlichen Funkblasen sind, umfassend Benutzerendgeräte (Ts, Tr1, Tr2), die zu einer selben Benutzergruppe gehören.

9. Verfahren zum Leiten eines Multicast-Datenflusses nach einem der Ansprüche 6 und 7, wobei der erste Knoten ein Rendezvous-Knotenpunkt (RP) ist und der zweite Knoten ein Verbindungsknoten des Netzwerks mit mindestens einer Funkblase (N8, N9) ist.

10. Verfahren zum Leiten einer Ablöseanforderung an einen Multicast-Datenfluss durch einen ersten Knoten (N11) bei einem zweiten Knoten (N7) in einem Kommunikationsnetzwerk, umfassend mindestens ein Teilnetz (SR1 bis SR5), wobei jeder Teilknoten mindestens zwei Nachbarknoten des Kommunikationsnetzes umfasst, wobei eine MAC-Adresse mit jedem Knoten (N1 bis N13) des Kommunikationsnetzwerks assoziiert ist und eine MAC-Adresse mit jedem Teilnetz (SR1 bis SR5) des Kommunikationsnetzwerks assoziiert ist, wobei das Leitverfahren aufeinanderfolgende Schritte (103) des Übertragens der Ablöseanforderung zwischen Nachbarknoten des Kommunikationsnetzwerks gemäß einer Route beinhaltet, die den ersten Knoten mit dem zweiten Knoten verbindet, wobei das Verfahren **dadurch gekennzeichnet ist, dass** die Übertragung der Ablöseanforderung zwischen den Nachbarknoten (N11 - N10) von einem Teilnetz eine Punkt-zu-Mehrpunkt-Funkverbindung nutzt, wenn der Zielknoten der Übertragung in dem Teilnetz der Knoten mit der größten Verbreitungskapazität in dem Teilnetz ist, und, im Falle von Gleichheit mit einem anderen Knoten des Teilnetzes, wenn der Zielknoten der Übertragung in dem Teilnetz eine Prioritätsregel erfüllt, die Übertragung der Ablöseanforderung zwischen Nachbarknoten (N11 - N10) eines Teilnetzes eine Punkt-zu-Punkt-Verbindung andernfalls nutzt.

11. Kommunikationsnetzwerk, das mindestens ein Teilnetz (SR1 bis SR5) umfasst, wobei jedes Teilnetz mindestens zwei Nachbarknoten des Netzwerks (N10, N11) umfasst, wobei eine MAC-Adresse mit jedem Knoten des Netzwerks assoziiert ist und eine MAC-Adresse mit jedem Satz von Knoten assoziiert ist, die ein Teilnetz bilden, wobei die Knoten des Netzwerks zum Übertragen einer Anhänganforderung an einen Datenfluss durch einen ersten Knoten (N11) bei einem zweiten Knoten (N7) des Kommunikationsnetzes mit den aufeinanderfolgenden Schritten des Übertragens der Anforderung zwischen Nachbarknoten des Kommunikationsnetzes gemäß einer Route konfiguriert sind, die den ersten Knoten mit dem zweiten Knoten verbindet, **dadurch gekennzeichnet, dass** die Knoten des Kommunikationsnetzes, die an der Übertragung der Anhänganforderung zwischen zwei Nachbarknoten (N11 - N10) eines Teilnetzes beteiligt sind, zum Nutzen einer Punkt-zu-Mehrpunkt-Funkverbindung, wenn der Zielknoten der Übertragung in dem Teilnetz der Knoten mit der größten Ausbreitungskapazität in dem Teilnetz ist, und, im Falle von Gleichheit mit einem anderen Knoten des Teilnetzes, wenn der Zielknoten der Übertragung in dem Netzwerk eine Prioritätsregel erfüllt, und zum Nutzen einer Punkt-zu-Punkt-Verbindung andernfalls konfiguriert sind.

## Claims

1. Method of routing a request to join a multicast data stream, made by a first node (N11) to a second node (N7) in a communications network comprising at least one subnetwork (SR1 to SR5), each subnetwork comprising at least two neighbouring nodes of the communications network, a MAC address being associated with each node (N1 to N13) of the communications network and a MAC address being associated with each subnetwork (SR1 to SR5) of the communications network, the routing method comprising successive steps of transmitting (103) the join request between neighbouring nodes of the communications network along a route connecting the first node to the second node, the method being **characterized in that** transmitting the join request between neighbouring nodes (N11 - N10) of a subnetwork uses a point-to-multipoint wireless link when the destination node of the transmission in the subnetwork is the node having the greatest broadcasting capacity in the subnetwork, and, in case of equality with another node of the subnetwork, when the destination node of the transmission in the subnetwork satisfies a priority rule, transmitting the join request between neighbouring nodes (N11-N10) of a subnetwork using a point-to-point link otherwise.

2. Method for routing a join request according to claim 1, wherein said point-to-multipoint wireless link uses as the level 2 destination address the MAC address of the subnetwork (SR1) to which said neighbouring nodes belong.

3. Method for routing a join request according to one of the preceding claims, further comprising a preliminary step (101), executed by the nodes of the network participating in the transmission of the join request, of discovering the broadcasting capacities of all the nodes of the subnetworks to which they belong.

4. Method for routing a join request according to any of the preceding claims, further comprising a preliminary step (102) of discovery, by the nodes of the network, of the wireless bubbles to which the network is connected by interconnecting nodes, and the groups belonging to these wireless bubbles.

5. Method for routing a join request according to claim 1, wherein the step of transmitting the join request between neighbouring nodes using a point-to-multipoint wireless link is executed by defining in a fixed way the paths followed by the join requests towards a rendezvous point node of the communications network.

6. Method for routing a multicast data stream between a first node (N7) and a second node (N11) in a communications network comprising at least one subnetwork (SR1 to SR5), each subnetwork comprising at least two neighbouring nodes of the communications network, a MAC address being associated with each node of the network and a MAC address being associated with each subnetwork, **characterized in that** it comprises the steps of:
- routing (103) a request to join the multicast data stream between said second node (N11) and said first node (N7) by a method of routing a join request according to any of Claims 1 to 5.
- adding (114) the path which is the reverse of the route followed by said request to join a broadcast tree of the multicast data stream transmitted from the first node,
- broadcasting the multicast data stream (115) in the communications network from the first node to the second node, following the paths defined by the broadcast tree.

7. Method for routing a multicast data stream according to claim 6, **characterized in that** the step of broadcasting the multicast data stream uses a method of broadcasting by recombination.

8. Method for routing a multicast data stream according to one of claims 6 and 7, wherein said first node (N7) and said second node (N8, N9) are interconnecting nodes of the network with different wireless bubbles comprising user terminals (Ts, Tr1, Tr2) belonging to the same user group.

9. Method for routing a multicast data stream according to one of claims 6 and 7, wherein said first node is a rendezvous point (RP) node, and said second node is an interconnecting node of the network with at least one wireless bubble (N8, N9).

10. Method for routing a request to leave a multicast data stream, made by a first node (N11) to a second node (N7) in a communications network comprising at least one subnetwork (SR1 to SR5), each subnetwork comprising at least two neighbouring nodes of the communications network, a MAC address being associated with each node (N1 to N13) of the communications network and a MAC address being associated with each subnetwork (SR1 to SR5) of the communications network, the routing method comprising successive steps of transmitting (103) the leave request between neighbouring nodes of the communications network along a route connecting the first node to the second node, the method being **characterized in that** transmitting the leave request between neighbouring nodes (N11 - N10) of a subnetwork uses a point-to-multipoint wireless link when the destination node of the transmission in the subnetwork is the node having the greatest broadcasting capacity in the subnetwork, and, in case of equality with another node of the subnetwork, when the destination node of the transmission satisfies a priority rule, transmitting the leave request between neighbouring nodes (N11-N10) of the subnetwork using a point-to-point link otherwise.

11. Communications network comprising at least one subnetwork (SR1 to SR5), each subnetwork comprising at least two neighbouring nodes of the network (N10, N11), a MAC address being associated with each node of the network and a MAC address being associated with each set of nodes forming a subnetwork, the nodes of the network being configured for transmitting a request to join a data stream made by a first node (N11) to a second node (N7) of the communications network by successive steps of transmitting the request between neighbouring nodes of the communications network along a route connecting the first node to the second node, **characterized in that** the nodes of the communications network involved in the transmission of the join request between two neighbouring nodes (N11 - N10) of a subnetwork are configured to use a point-to-multipoint wireless link when the destination node of the transmission in the subnetwork is the node having the greatest broadcasting capacity in the subnetwork, and, in case of equality with another node of the subnetwork, when the destination node of the transmission in the network satisfies a priority rule, and to use a point-to-point link otherwise.
